# EUROPEAN PATENT SPECIFICATION

(11) **EP 1 302 373 B1**
(45) Date of publication and mention of the grant of the patent: **07.09.2005**
(21) Application number: 01308729.1
(22) Date of filing: 12.10.2001
(51) Int. Cl.: B60R 21/20

(54) **Airbag cover with a tear seam**
Airbagabdeckung mit einer Aufreisslinie
Couvercle pour module de coussin gonflable avec zone de rupture préférentielle

(43) Date of publication of application: 16.04.2003
(73) Proprietor: Sanko Gosei Kabushiki Kaisha, Toyama-ken (JP)
(72) Inventor: Yasuda, Mitsuo, c/o Sanko Gosei K.K., Nishi Tonami-Gun, Toyama-ken (JP); Nakashima, Yoshiharu, c/o Sanko Gosei K.K., Nishi Tonami-Gun, Toyama-ken (JP)
(74) Representative: Stanley, David William

(56) References cited:
- EP-A- 1 153 809
- WO-A-99/01317
- JP-A- 2001 277 978

## Description

This invention relates to airbag apparatus for use in a vehicle - for example, in an automobile to protect passengers sitting in the front passenger seat, the driver's seat, or the seats at both left and right side columns from any potential impact in an accident, thus proving more safety.

An airbag apparatus for use in a vehicle such as an automobile and installed at a driver's seat, a passenger seat or left or right side columns typically comprises an airbag element, an airbag case accommodating the airbag element in its folded form and an inflator for inflating the airbag element, and is typically covered by an interior cover of the vehicle.

Furthermore, an interior cover of an automobile generally comprises an instrument panel cover made of synthetic resin such as polypropylene (hereinafter referred to as an "interior cover") which covers a panel core made of a moulded form of synthetic resin such as polypropylene.

Examples of known airbag apparatus will now be described, by way of example, with reference to Figures 1 to 6 of the accompanying diagrammatic drawings, in which:
Figure 1 is an explanatory perspective view showing a conventional airbag system, wherein a fracture-opening section is formed in an instrument panel cover to break open when the airbag element inflates;
Figure 2 is a cross-sectional view along the line 2A-2A in Figure 1;
Figure 3 is a partial, enlarged, explanatory perspective view showing another conventional airbag system, wherein a fracture-opening section is formed in an instrument panel cover to make it fracture when the airbag element inflates;
Figure 4 is a schematic cross-sectional view along the line of 4B-4B in Figure 3.
Figure 5 is an explanatory, detailed perspective view showing an interior panel with a fracture-opening section removed; and
Figure 6 is an enlarged cross-sectional view taken along the arrow C in Figure 5.

In the figures, like reference numerals denote like or corresponding parts.

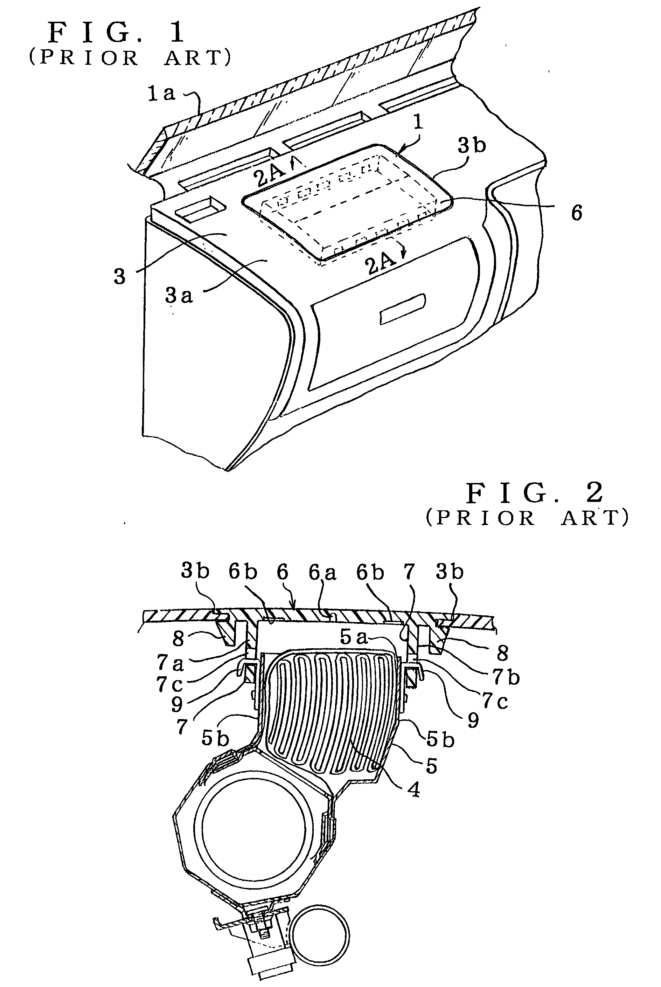

A conventional passenger-side airbag apparatus 1, as shown in Figures 1 and 2, is installed on the horizontal surface 3a of an interior cover 3 near a windshield 1a, and accommodates an airbag element 4 in its folded form which will inflate by supplying a flow of gas from an inflator. The apparatus 1 contains an airbag case 5 having an opening 5a opposite the rear surface of the interior cover 3, wherein an opening lid 6 moulded of flexible synthetic resin is mounted in an opening 3b formed in the interior cover 3, opposite the opening 5a in the case 5 of the interior cover 3, and the opening lid 6 is separated apart in the forward and rearward directions of the automobile by breaking off into two parts at grooves 6a, 6b formed in the centre and periphery of the opening lid 6 when the airbag element 4 inflates.

On the rear surface of the opening lid 6 are provided mounting legs 7 which have a rectangular shape in horizontal cross-section and are moulded as a single unit with the opening lid 6, having a slightly larger periphery than that of the opening 5a of the case 5, and a plurality of joiners 8 to engage resiliently with the opening circumference of the opening 3b formed in the interior cover 3. Furthermore, a plurality of angular through holes 7c are formed on front and rear wall surfaces 7a, 7b of the mounting legs 7, which are engaged by a plurality of hooks 9 mounted to front and rear wall surfaces 5b, 5b of the opening 5a of the case 5, when the opening lid 6 is attached to the opening 3b formed in the interior cover 3.

When the airbag element 4 inflates, the opening lid 6 breaks off into front and rear sections at the position of the grooves 6a, 6b formed at its periphery and centre, and after the inflation of the airbag element, the plurality of angular holes 7c in the front and rear wall surfaces 7a, 7b of the mounting legs 7 remain engaged with the hooks 9 which are mounted to the front and rear wall surfaces 5b, 5b of the opening 5a of the case 5, hence preventing the opening lid 6 from generating sharp edges on scattered broken pieces.

However, in the passenger-side airbag apparatus as shown in Figure 1, the construction is such that the opening 3b in the interior cover 3 is formed in a position corresponding to the opening 5a in the airbag case 5, and further, the opening lid 6, which is engaged with this opening 3b, is separately formed of flexible resin material different from that of the interior cover 3. Accordingly, there are still some troublesome manufacturing problems, and the opening lid 6 can be easily deformed by external pressure, resulting in damage to the appearance or design of the interior cover.

Also, there may be another problem in that the opening lid 6 may pop out, because there is no reinforcement cover mounted on the back side of the opening lid 6 in the separately formed opening lid 6 and the engagement between the mounting legs 7 of the opening lid 6, and the hooks 9 mounted to the forward and rear wall surfaces 5b, 5b of the opening 5a of the airbag case 5 can be easily separated upon the inflation of the airbag clement 4, because the engagement is by way of flexible resin.

Accordingly, in order to overcome such problems as mentioned above, the present applicant proposed a seamless type passenger-side airbag system by our prior Japanese Patent Application No. 2000-20238 (filed on January 28, 2000), where a separately formed open lid is not used, and consequently no line appears in the interior cover. A similar seamless-type passenger airbag system cover is also known from WO 99/01317.

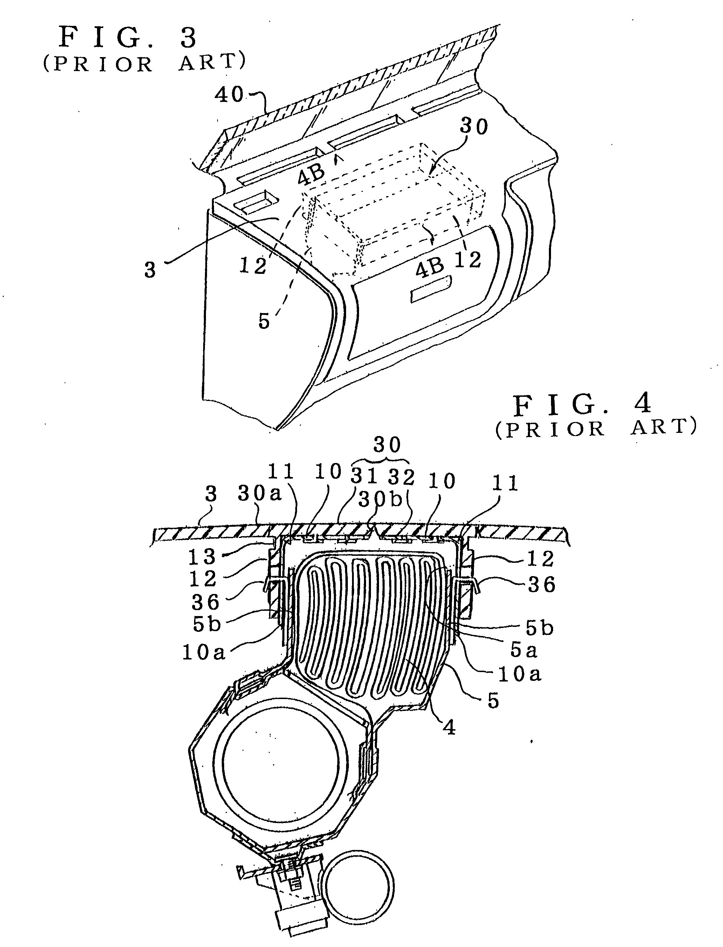

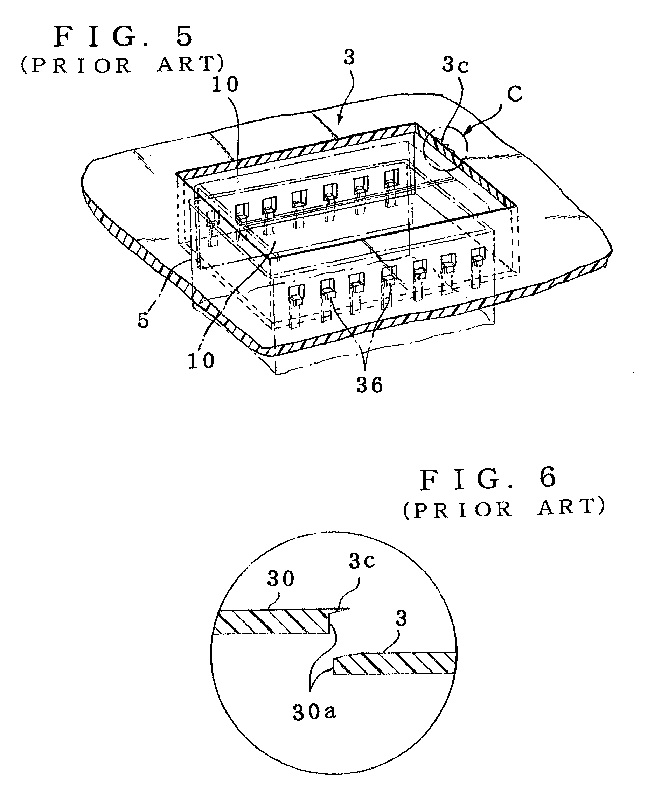

Figure 3 is a partial enlarged view showing that a fracture-opening section 30 for inflating an airbag is formed in a single plate shaped interior cover 3 of a passenger-side airbag apparatus. Figure 4 is a schematic cross-sectional view taken along the line 4B-4B in Figure 3. Figure 5 is an explanatory view showing the device with fracture-opening section 30 removed from the interior panel 3. Figure 6 is an enlarged cross-sectional view taken along the arrow C in Figure 5.

In Figures 3 and 4, in the interior cover 3, the fracture-opening section 30 for use upon the inflating of the airbag element is formed corresponding to the size of the opening 5a in the airbag case 5, by forming grooves 30a, 30b extending circumferentially in a dotted line or a broken line with a pulsating laser beam from a laser generating device (not shown) which relatively moves from the back side of the interior cover3 along the external margins of reinforcement plates 10a, 10a mounted to the back side of the interior cover. In addition, when the airbag element inflates, it breaks the fracture-opening section 30, lifting up the groove 30b formed therein into leftward and rightward longer directions - in a way like a double-door opening outwardly.

This prior application provides airbag apparatus for automobiles constructed such that the fracture-opening section 30 in the interior cover 3 is separated from the interior cover 3 by the airbag element 4 when it inflates, and one end of the level surface of the reinforcement plates 10a, 10a respectively is mounted to the back side of fracture-opening section 30 of the interior cover 3 by thermal bonding, while the other end thereof is allowed to hang at the rear surface of the interior cover 3 via hinges 11, 11 and engaged with a pair of reinforcement ribs 12 separated by a distance slightly wider than the width of the opening 5a in the airbag case 5. This construction has improved the drawbacks existing in the prior art with an opening lid 6 constructed separately, hence reducing a force of impact onto a passenger when the vehicle or automobile is involved in a collision, preventing the fracture-opening section 30 of the interior cover 3 lifting up like double doors opening outward from popping out when the airbag element inflates, and further protecting the chest and head of passenger seated on the front seat from any potential danger.

Sections 13 are thin portions formed at rear connecting portions in the interior cover 3 of a pair of reinforcement ribs 12. As the airbag element is instantly inflated, it fractures the thin portions at the rear connecting portions of the interior cover 3 and abruptly lifts up the fracture-opening section 30 of the interior cover 3.

In the airbag apparatus for automobiles constructed as described above, when the automobile is involved in a collision, the impact force is detected by one or more sensor, and this in turn is judged by a control device like a CPU, as to whether or not it is over a predetermined value, and in the case that the value is judged as "over the predetermined value", a signal output from the control device causes the inflator to generate a certain amount of gas.

The pressure within the inflating airbag element acts on the inside surface of the fracture-opening section 30 of the interior cover 3, causing the fracture-opening section to break along the grooves 30a, 30b and separate from the interior cover 3, and then this separated fracture-opening section 30 can be opened outside of the interior cover 3 by a fulcrum action of each hinge 11 of the reinforcement plate 10a, 10a, respectively.

The airbag element 4 inflates outside of the interior cover 3 from the opened fracture-opening section 30, hence protecting the passenger from the impact of a collision of the vehicle by supporting the chests, heads, arms or legs of passengers seated on the driver seat, the passenger seat, and seats at both the left and right side columns.

However, there are still other drawbacks in the improved interior cover 3, and the fracture-opening section 30 has some defects in its safety as mentioned below. In the interior cover 3 of the prior improved device, the fracture grooves 30a, 30b are formed, penetrating at a right angle from the backside toward the front of the interior cover 3, and the reinforcement plates 10a, 10a bent by the hinges 11 along the longer direction of each of left and right sides of the fracture-opening section 30 are thermally bonded in place, respectively, and then, the other ends of the reinforcement plates 10a, 10a arc engaged with respectively a pair of front and rear reinforcement ribs 12, 12 protruding in the longer direction (from leftward to rightward) of the fracture-opening section 30, so that in the front and rear fracture grooves 30a in the longer direction (from leftward to rightward) of the fracture-opening section 30, or in the central fracture groove 30b of the fracture-opening section 30, a fracture surface does not have any serious problems in its fracture shape when the airbag element inflates, while, since the fracture of the left and right fracture grooves 30a in the shorter direction (from forward to backward) has no hinges for the reinforcement ribs 12, 12 and the reinforcement plates 10a, 10a, the device is structurally weak in the fracture in frontward-rearward shorter directions of fracture-opening section 30 and the fracture surface can become serrated. In particular, under severe weather conditions where the temperature inside the car can rise to as high as +75°C in summer and drop to - 35°C in winter, as shown in Figure 6, a shearing force would act to cause sharp edges 3c to occur on the fracture surface.

Preferred embodiments of the invention aim to provide an airbag apparatus for automobiles that has a highly safe fracture-opening section in which, upon fracturing to release the airbag, sharp edges are not easily formed at the fracture surfaces in the fracture-opening section, especially in frontward-rearward shorter directions.

According to one aspect of the present invention, there is provided an airbag apparatus for a vehicle, the apparatus comprising:
a. an airbag case having an opening;
b. an airbag element stowed within said case, said element being arranged to inflate and expand through said opening upon actuation of the airbag apparatus;
c. a cover forming a component of said vehicle and being disposed adjacent said airbag case;
d. a fracture-opening section defined by fragile lines in said cover in a region substantially opposite said case opening, at least some of said fragile lines being arranged to fracture to allow said section to open upon actuation of the airbag apparatus;
e. at least one rib depending from said cover around said airbag case; and
f. attachment means provided on said airbag case and rib to attach said airbag case and rib together along at least one side of said airbag case and respective side of said rib:
   wherein:
   spacings are provided between said airbag case and rib along at least two respective sides of said airbag case and rib that extend transversely to said one side; and
   respective ones of said fragile lines are located at positions facing said spacings , intermediate said respective sides of said airbag case and rib, such that said fracture-opening section, defined by said fragile lines in said cover, is larger in plan than said opening in said airbag case.

Said cover may be an internal fascia cover of said vehicle.

Said cover may be a component of a steering wheel of said vehicle.

Said cover may be a component of a side column of said vehicle.

Preferably, said fragile lines are formed in an underside of said cover substantially opposite said case opening.

Preferably, said rib is of substantially rectangular cross-section.

Preferably, said one side of said airbag case extends substantially longitudinally of said vehicle.

Preferably, said attachment means comprises:
mounting holes provided at predetermined intervals along said respective side of said rib adjacent said one side of said airbag case; and
hooks provided on said one side of said airbag case and engaging said mounting holes.

Preferably, an airbag apparatus as above further comprises reinforcement plate means attached to said fracture-opening section in order to reinforce said section.

Preferably, said reinforcement plate means has a shape and size corresponding substantially to those of said fracture-opening section.

Preferably, said reinforcement plate means is provided with a depending mounting section that is adjacent said respective side of said rib adjacent said one side of said airbag case and is formed with holes that register with said mounting holes.

Preferably, each of said two respective sides of said rib that extend transversely to said one side of said airbag case is spaced from an adjacent edge of said reinforcement plate means by a distance in the range 5mm to 30mm, measured parallel to the respective said spacing.

Preferably, said spacings are in the range 10mm to 40mm.

Preferably, each of said fragile lines located at a position facing a said spacing between said respective sides of said airbag case and rib is spaced from the respective side of the rib by a distance in the range 5mm to 20mm, measured parallel to the respective said spacing.

Preferably, said fragile lines arc formed in an underside of said cover at predetermined intervals by laser cutting along the outline of the fracture-opening section from the underside of said cover with a pulsating laser beam generated from a laser generator.

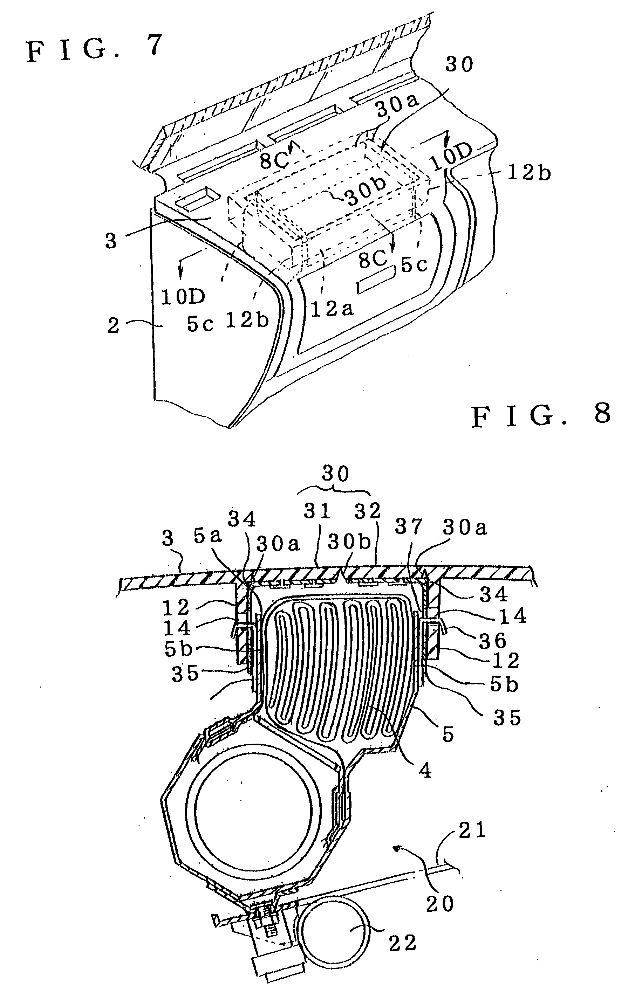

For a better understanding of the invention, and to show how embodiments of the same may be carried into effect, reference will now be made, by way of example, to Figures 7 to 11 of the accompanying diagrammatic drawings, in which:
Figure 7 is a perspective view of one example of an airbag apparatus for a vehicle or an automobile, according to one embodiment of the present invention, where it is applied to a passenger-side seat;

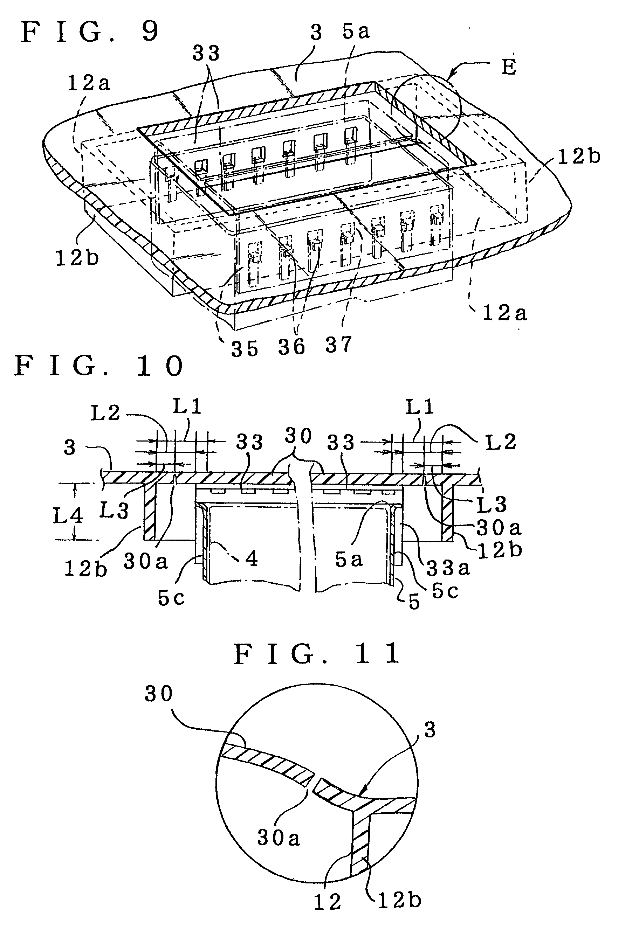

Figure 8 is a cross-sectional view taken along the line 8C-8C in Figure 7;
Figure 9 is a partial top perspective view of an interior cover with an airbag apparatus for a passenger-side seat being provided, showing a schematic explanatory view where the fracture-opening section is removed;
Figure 10 is a cross-sectional view taken along the line 10D-10D in Figure 7; and
Figure 11 is an enlarged view of the cross-sectional view taken along the arrow E in Figure 9.

As before, like reference numerals denote like or corresponding parts.

As shown in Figures 7 and 8, there is provided an instrument panel cover 3 (hereinafter referred to as interior cover) covering the surface of an instrument panel core 2, which are both made of moulded synthetic forms of resin such as polypropylene. The interior cover 3 is mounted to the instrument panel 2, which in turn is tightened by proper means like tapping screws to the frame of a vehicle (not shown).

As shown in Figure 8, a receiving portion 20, in which a metal airbag case 5 is received, is formed with a partition member 21 at the location opposite to the passenger seat on the left side (a car made in Japan with the steering wheel situated on the right side). The present invention may be applied to a vehicle with the steering wheel situated on the left side where the passenger-side airbag system is installed correspondingly at the right side.

The partition member 21 can be mounted removably to the vehicle frame with a plurality of tapping screws so as to make it easy to build case 5 into the interior cover 3.

The fracture-opening section 30, which is fractured when the airbag 4 inflates, is formed at the location of the interior cover 3 opposite to the receiving portion 20. This fracture-opening section 30 is rectangular with nearly the same area as the opening 5a of the case 5, and is designed to be fractured along a fragile line formed as a fracture groove 30a by laser cutting as described later on, and can be broken into two parts along a centre fragile line or fracture groove 30b that is a fragile section formed at the centre of the fracture-opening section 30 in the longer direction thereof. In this connection, the longer direction of the section 30 is transverse of the longitudinal front-rear line of the vehicle - that is, extending between left and right of the vehicle.

The under side of the interior cover 3 has reinforcement ribs 12 having a rectangular horizontal cross-section and mounted downwardly along the outer periphery of the fracture-opening section 30. A plurality of engagement holes 14 are formed respectively in the front and rear sidewalls 12a, 12a located in the leftward and rightward longer directions of these reinforcement ribs 12. As indicated above, "front" and "rear" relate to the front to rear line of the vehicle.

The airbag element 4 is received in the airbag case 5 in its folded form, and is connected to an inflator (gas generator) (not shown) disposed outside of the partition 21 via a gas flow pipe 22.

The fracture-opening section 30 is formed opposite to the opening 5a in the case 5 positioned below the interior cover 3, and comprises front and rear subsections 31, 32 arranged to be separated by fracture at the centre fracture groove 30b which is formed almost in the centre of the fracture-opening section 30 and extends in the longitudinal direction of the section 30 (transversely of the vehicle). The left and right side walls 12b, 12b of the reinforcement ribs 12 are respectively spaced apart from left and right side walls 5c, 5c of the airbag case 5 at predetermined intervals, and the fracture groove 30a of the fracture-opening section is formed between these spaced walls

In the front and rear subsections defined by the fracture groove 30b, the fracture groove 30b may be slightly biased so that the rear subsection 32 on the passenger's seat side in the automobile is sized slightly smaller than the front subsection 31 at the side of the windshield 40.

The fracture grooves 30a and the central fracture groove 30b of the fracture-opening section 30 are formed as fragile sections in the interior cover 3 by emitting a pulsating laser beam generated from a laser generator (not shown), relatively moving it along the outline as well as the centre line of the fracture-opening section 30 from the backside (underside) of the interior cover 3. The horizontal body portion of each of two reinforcement plates 33, 33 is fixedly joined by thermal bonding to the backsides of the front and rear subsections 31, 32, respectively. Further, each of the reinforcement plates 33, 33 has a mounting section 35 bent inwardly from hinge 34 communicating with the horizontal body portions, and in each mounting section 35 are formed elongate holes 37 engaged with hooks 36 provided on and protruding from the airbag case 5.

In the frontward to rearward shorter directions of the reinforcement ribs 12, the distance between the left and right side walls 12b, 12b of the reinforcement ribs and the interior surfaces of the left and right side edges 5c, 5c of the airbag case 5 is within the range 10mm to 40mm, as shown by the numeral L1 in Figure10. The interval between the left and right side walls 12b, 12b of the reinforcement ribs and the left and right side wall 33a, 33a of the reinforcement plates 33, 33 is within the range 5mm to 30mm as shown by the numeral L2. The fracture grooves 30a made in the fracture-opening section 30 are formed at a spacing in the range 5mm to 20mm from the left and right side walls 12b, 12b of the reinforcement ribs 12, as shown by the numeral L3. The length of the depending reinforcement ribs 12, as shown by the numeral L4, is between 5mm and 30mm.

Next, the forming of the fracture-opening section 30 in the interior cover 3 opposite the container 20 will be described below.

In forming the fracture groove 30a and the centre fracture groove 30b in the interior cover 3 so as to fracture the fracture-opening section 30 when the airbag 4 inflates, a pulsating laser beam (output: 3kW to 5kW) of a predetermined frequency (e.g. 7kHz) is generated intermittently at a fixed period from a conventional laser generator (not shown). To form the fracture groove 30a in leftward and rightward longer directions, the laser beam is emitted from the rear side (underside) of the interior cover 3 while being relatively moved at a predetermined speed along the outer periphery of the reinforcement plates 33 mounted to the rear surface, and is further emitted to form the fracture groove 30a in the frontward to rearward shorter directions at the position spaced from the left and right side walls 12b, 12b of the reinforcement ribs 12 by 5mm to 20mm.

Thereby, in the interior cover 3, the fracture grooves are defined by laser beam cutting to desired depths, formed in accordance with the relative movement, speed and pattern of laser radiation emitted from the laser generator.

It is preferable that, when the airbag 4 inflates and expands, the divided subsection 32 on the passenger seat side of the vehicle is sized such that it does not protrude toward any slope facing the passenger seat, which may continue from a horizontal surface of the interior cover 3.

In use of the above-described airbag apparatus, a sensor detects a force of collision when the vehicle is involved in a head-on collision, and a control device such as a CPU judges whether the power of collision detected by this sensor exceeds a predetermined value. When the power is judged to be over the predetermined value, an inflator is instantly activated in response to a signal output from the control device to generate a predetermined gas flow, hence inflating and expanding the airbag element 4 rapidly.

At the initial time of inflating the airbag element 4, some pressure is applied to the reinforcement plates 33. However, since the sections 35 for mounting the reinforcement plate members 33 remain engaged with the hooks 36 of the airbag case 5 through the long holes 37, the pressurized load that tends to urge the reinforcement plates 33 to move upwards is reduced, hence reducing stress on the thermally bonded portion joining the front and rear subsections 31, 32 that occurs when the reinforcement plate 33 is deformed, and protecting the thermally bonded portion from coming off, thereby preventing the front and rear subsections 31, 32 from popping out. In addition, the fracture grooves 30a and 30a in the shorter leftward and rightward transverse directions are formed in positions spaced from the left and right side walls 12b, 12b of the reinforcement rib 12 in the leftward and rightward shorter directions, so that the fracture-opening section 30 of the interior cover 3 can absorb the shearing stress by its deformation just before the inflation of the airbag element 4 is completed as shown in Figure 11, hence preventing the occurrence of a serrated portion with jagged projections in the fracture section of the fracture-opening section 30, and providing a fine fracture surface.

The airbag element 4 inflates and expands outwardly of the interior cover 3 through the sheared subsections 31, 32 and simultaneously the shock absorption yielded by the inflation of the airbag element 4 acts as the support of the head and chest of the passenger sitting on the passenger seat, thereby protecting the passenger from the force of impact given upon collision of a vehicle and ensuring safety.

According to the passenger-side airbag apparatus described above, the subsections 31, 32 can spread outwardly along the fracture grooves 30a as well as the centre fracture groove 30b made on the back side (underside) of the interior cover 3 by laser cutting, and the pressure against the thermal bonded portion between the subsections 31, 32 and the reinforcement plate members 33, 33 can be rather reduced. Accordingly, said construction can ensure that the subsections 31, 32 of the interior cover 3 lift up together with the reinforcement plate members 33, 33 without deformation thereof, hence preventing the passenger from danger, and furthermore, the adverse force exerted to the hinge sections is also significantly reduced, thus protecting the mounting sections 35, 35 for the reinforcement plates 33, 33 from being broken.

In the embodiment as above, an airbag apparatus to be installed for a front passenger seat is described, but other embodiments of the present invention may be also be applied to such airbag apparatuses that are to be installed in the central section of a steering wheel as well as the side columns of a vehicle.

The above embodiment has been described with a fracture-opening section having a construction like that of double doors opening outwardly. But it should be noted that another embodiment having a construction like that of a single swing door may be applied although, in such an embodiment, the reinforcement plate members may have a construction slightly different from the above embodiment, in which reinforcement plate members are fixedly joined by thermal bonding to the inner surface of the interior cover.

In this specification, the verb "comprise" has its normal dictionary meaning, to denote non-exclusive inclusion. That is, use of the word "comprise" (or any of its derivatives) to include one feature or more, does not exclude the possibility of also including further features.

## Claims

1. An airbag apparatus for a vehicle, the apparatus comprising:
a. an airbag case (5) having an opening (5a);
b. an airbag element (4) stowed within said case (5), said element (4) being arranged to inflate and expand through said opening (5a) upon actuation of the airbag apparatus;
c. a cover (3) forming a component of said vehicle and being disposed adjacent said airbag case (5);
d. a fracture-opening section (30) defined by fragile lines (30a) in said cover (3) in a region substantially opposite said case opening (5a), at least some of said fragile lines (30a) being arranged to fracture to allow said section (30) to open upon actuation of the airbag apparatus;
e. at least one rib (12) depending from said cover (3) around said airbag case (5); and
f. attachment means (14,36) provided on said airbag case (5) and rib (12) to attach said airbag case (5) and rib (12) together along at least one side (5b) of said airbag case (5) and respective side (12a) of said rib (12):
**characterised in that**:
spacings (L1) are provided between said airbag case (5) and rib (12b) along at least two respective sides (5c, 12b) of said airbag case (5) and rib (12) that extend transversely to said one side (5b); and
respective ones of said fragile lines (30a) are located at positions facing said spacings (L1), intermediate said respective sides (5c, 12b) of said airbag case (5) and rib (12), such that said fracture-opening section (30), defined by said fragile lines (30a) in said cover (3), is larger in plan than said opening (5a) in said airbag case (5).

2. An airbag apparatus according to claim 1, wherein said cover (3) is an internal fascia cover of said vehicle.

3. An airbag apparatus according to claim 1, wherein said cover (3) is a component of a steering wheel of said vehicle.

4. An airbag apparatus according to claim 1, wherein said cover (3) is a component of a side column of said vehicle.

5. An airbag apparatus according to any of the preceding claims, wherein said fragile lines (30a) are formed in an underside of said cover (3) substantially opposite said case opening (5a).

6. An airbag apparatus according to any of the preceding claims, wherein said rib (12) is of substantially rectangular cross-section.

7. An airbag apparatus according to any of the preceding claims, wherein said one side (5b) of said airbag case (5) extends substantially longitudinally of said vehicle.

8. An airbag apparatus according to any of the preceding claims, wherein said attachment means (14, 36) comprises:
a. mounting holes (14) provided at predetermined intervals along said respective side (12a) of said rib (12) adjacent said one side (5b) of said airbag case (5); and
b. hooks (36) provided on said one side (5b) of said airbag case (5) and engaging said mounting holes (14).

9. An airbag apparatus according to any of the preceding claims, further comprising reinforcement plate means (33) attached to said fracture-opening section (30) in order to reinforce said section (30).

10. An airbag apparatus according to claim 9, wherein said reinforcement plate means (33) has a shape and size corresponding substantially to those of said fracture-opening section (30).

11. An airbag apparatus according to claim 9 or 10 together with claim 8, wherein said reinforcement plate means (33) is provided with a depending mounting section (10a) that is adjacent said respective side (12a) of said rib (12) adjacent said one side (5b) of said airbag case (5) and is formed with holes that register with said mounting holes (14).

12. An airbag apparatus according to claim 9, 10 or 11, wherein each of said two respective sides (12b) of said rib (12) that extend transversely to said one side (5b) of said airbag case (5) is spaced from an adjacent edge of said reinforcement plate means (33) by a distance (L2) in the range 5mm to 30mm, measured parallel to the respective said spacing (L1).

13. An airbag apparatus according to any of the preceding claims, wherein said spacings (L1) are in the range 10mm to 40mm.

14. An airbag apparatus according to any of the preceding claims, wherein each of said fragile lines (30a) located at a position facing a said spacing (L1) between said respective sides (5c, 12b) of said airbag case (5) and rib (12) is spaced from the respective side (12b) of the rib (12) by a distance (L3) in the range 5mm to 20mm, measured parallel to the respective said spacing (L1).

15. An airbag device apparatus according to any of the preceding claims, wherein said fragile lines (30a) are formed in an underside of said cover (3) at predetermined intervals by laser cutting along the outline of the fracture-opening section from the underside of said cover (3) with a pulsating laser beam generated from a laser generator.

## Patentansprüche

1. Airbag-Vorrichtung für ein Fahrzeug, wobei die Vorrichtung umfaßt:
a. ein Airbag-Gehäuse (5) mit einer Öffnung (5a);
b. ein Airbag-Element (4), das innerhalb des Gehäuses (5) verstaut ist, wobei das Element (4) angeordnet ist, um sich bei Ingangsetzung der Airbag-Vorrichtung aufzublasen und durch die Öffnung (5a) zu erstrecken;
c. eine Abdeckung (3), die ein Bauteil des Fahrzeugs bildet und angrenzend an dem Airbag-Gehäuse (5) angeordnet ist;
d. ein Bruch-Öffnungsabschnitt (30), der durch Bruchlinien (30a) in der Abdeckung (3) in einem Bereich im wesentlichen gegenüber der Gehäuseöffnung (5a) definiert wird, wobei zumindest einige der Bruchlinien (30a) angeordnet sind, um zu brechen, um zu ermöglichen, daß der Abschnitt (30) sich bei Ingangsetzung der Airbag-Vorrichtung öffnet;
e. mindestens eine Rippe (12), die von der Abdeckung (3) um das Airbag-Gehäuse (5) herabhängt; und
f. ein Befestigungsmittel (14,36), das an dem Airbag-Gehäuse (5) und der Rippe (12) vorgesehen ist, um das Airbag-Gehäuse (5) und die Rippe (12) zusammen entlang mindestens einer Seite (5b) des Airbag-Gehäuses (5) und entsprechenden Seiten (12a) der Rippe (12) zu befestigen:
**dadurch gekennzeichnet, daß**:
Zwischenräume (L1) zwischen dem Airbag-Gehäuse (5) und der Rippe (12b) entlang mindestens zwei entsprechenden Seiten (5c, 12b) des Airbag-Gehäuses (5) und der Rippe (12) vorgesehen sind, die sich zu einer Seite (5b) schräg erstrecken; und
die entsprechenden Bruchlinien (30a) sind an Positionen gegenüberliegend den Zwischenräumen (L1) angeordnet, zwischen den entsprechenden Seiten (5c, 12b) des Airbag-Gehäuses (5) und der Rippe (12), so daß der Bruch-Öffnungsabschnitt (30), der durch die Bruchlinien (30a) in der Abdeckung (3) definiert wird, im Grundriß größer als die Öffnung (5a) im Airbag-Gehäuse (5) ist.

2. Airbag-Vorrichtung nach Anspruch 1, wobei die Abdeckung (3) eine Innenarmaturenbrett-Abdeckung des Fahrzeugs ist.

3. Airbag-Vorrichtung nach Anspruch 1, wobei die Abdeckung (3) ein Bauteil des Lenkrads des Fahrzeugs ist.

4. Airbag-Vorrichtung nach Anspruch 1, wobei die Abdeckung (3) ein Bauteil der seitlichen Säule des Fahrzeugs ist.

5. Airbag-Vorrichtung nach einem der vorhergehenden Ansprüche, wobei die Bruchlinien (30a) auf einer Unterseite der Abdeckung (3) im wesentlichen gegenüberliegend der Gehäuseöffnung (5a) gebildet sind.

6. Airbag-Vorrichtung nach einem der vorhergehenden Ansprüche, wobei die Rippe (12) einen im wesentlichen rechteckigen Querschnitt aufweist.

7. Airbag-Vorrichtung nach einem der vorhergehenden Ansprüche, wobei die eine Seite (5b) des Airbag-Gehäuses (5) sich im wesentlichen longitudinal des Fahrzeugs erstreckt.

8. Airbag-Vorrichtung nach einem der vorhergehenden Ansprüche, wobei das Befestigungsmittel (14,36) umfaßt:
a. Montagelöcher (14), die in vorbestimmten Intervallen entlang der entsprechenden Seite (12a) der Rippe (12) angrenzend an der einen Seite (5b) des Airbag-Gehäuses (5) vorgesehen ist, und
b. Haken (36), die an der einen Seite (5b) des Airbag-Gehäuses (5) vorgesehen sind und in die Montagelöcher (14) eingreifen.

9. Airbag-Vorrichtung nach einem der vorhergehenden Ansprüche, des weiteren umfassend ein Verstärkungsplatten-Mittel (33), das an dem Bruch-Öffnungsabschnitt (30) befestigt ist, um den Abschnitt (30) zu verstärken.

10. Airbag-Vorrichtung nach Anspruch 9, wobei das Verstärkungsplatten-Mittel (33) eine Form und Größe im wesentlichen entsprechend zu denen des Bruch-Öffnungsabschnitts (30) aufweist.

11. Airbag-Vorrichtung nach Anspruch 9 oder 10 zusammen mit Anspruch 8, wobei das Verstärkungsplatten-Mittel (33) mit einem herabhängenden Montageabschnitt (10a) versehen ist, der angrenzend an der entsprechenden Seite (12a) der Rippe (12) angrenzend an der einen Seite (5b) des Airbag-Gehäuses (5) angeordnet ist und mit Löchern ausgebildet ist, die mit den Montagelöchern (14) fluchten.

12. Airbag-Vorrichtung nach Anspruch 9, 10 oder 11, wobei jede der entsprechenden Seiten (12b) der Rippe (12), die sich schräg zu der einen Seite (5b) des Airbag-Gehäuses (5) erstrecken, beabstandet von einer angrenzenden Kante des Verstärkungsplatten-Mittels (33) durch einen Abstand (L2) im Bereich von 5 mm bis 30 mm, gemessen parallel zu dem entsprechenden Zwischenraum (L1), ist.

13. Airbag-Vorrichtung nach einem der vorhergehenden Ansprüche, wobei die Zwischenräume (L1) im Bereich von 10 mm bis 40 mm sind.

14. Airbag-Vorrichtung nach einem der vorhergehenden Ansprüche, wobei jede der Bruchlinien (30a), die an einer Position gegenüber dem Zwischenraum (L1) zwischen den entsprechenden Seiten (5c, 12b) des Airbag-Gehäuses (5) und der Rippe (12) angeordnet sind, beabstandet von der entsprechenden Seite (12b) der Rippe (12) mit einem Abstand (L3) im Bereich von 5 mm bis 20 mm, gemessen parallel zu dem entsprechenden Zwischenraum (L1), ist.

15. Airbag-Vorrichtung nach einem der vorhergehenden Ansprüche, wobei die Bruchlinien (30a) auf einer Unterseite der Abdeckung (3) mit vorbestimmten Intervallen durch Laserschnitte entlang des Umrisses des Bruch-Öffnungsabschnittes von der Unterseite der Abdeckung (3) mit einem pulsierenden Laserstrahl, der von einem Lasergenerator erzeugt wurde, ausgebildet sind.

## Revendications

1. Dispositif de coussin gonflable (ou airbag) pour un véhicule, le dispositif comprenant :
a) une caisse de coussin gonflable (5) ayant une ouverture (5 A) ;
b) un élément de coussin gonflable (4) rangé dans ladite caisse (5), ledit élément (4) étant arrangé pour se gonfler et s'étendre à travers ladite ouverture (5 A) lors de la mise en marche dudit dispositif de coussin gonflable ;
c) un couvercle (3) formant un composant dudit véhicule et étant disposé adjacent à ladite caisse de coussin gonflable (5) ;
d) une section d'ouverture par fracture (30) définie par les lignes fragiles (30 A) dans ledit couvercle (3) dans une région sensiblement opposée à ladite ouverture de caisse (5 A), au moins certaines desdites lignes fragiles (30 A) étant arrangées pour se fracturer pour permettre à ladite section (30) de s'ouvrir lors de la mise en marche du dispositif du coussin gonflable ;
e) au moins une côte (12) dépendante dudit couvercle (3) autour de ladite caisse de coussin gonflable (5) ; et
f) des moyens d'attachement (14, 36) prévus sur ladite caisse de coussin gonflable (5) et sur la côte (12) pour attacher ensemble ladite caisse de coussin gonflable (5) et ladite côte (12) le long d'au moins un côté (5 B) de ladite caisse de coussin gonflable (5) et du côté respectif (12 A) de ladite côte (12) :
**caractérisé en ce que** :
des espacement (L 1) sont prévus entre ladite caisse de coussin gonflable (5) et ladite côte (12 B) le long d'au moins deux côtés respectifs (5 C, 12 B) de ladite caisse de coussin gonflable (5) et de la côte (12) qui s'étendent de manière transversale vers ledit au moins un côté (5 B) ; et
des lignes fragiles respectives desdites lignes fragiles (30 A) sont disposées à des positions faisant face auxdits espacements (L 1), au milieu desdits côtés respectifs (5 C, 12 B) de ladite caisse de coussin gonflable (5) de ladite côte (12), de manière telle que ladite section d'ouverture par fracture (30) définie par lesdites lignes fragiles (30 A) dans ledit couvercle (3), est plus grande en plan que ladite ouverture (5 A) dans ladite caisse de coussin gonflable (5).

2. Dispositif de coussin gonflable selon la revendication 1, **caractérisé en ce que** ledit couvercle (3) est un couvercle à panneau interne dudit véhicule.

3. Dispositif de coussin gonflable selon la revendication 1, **caractérisé en ce que** ledit couvercle (3) est un composant d'un volant dudit véhicule

4. Dispositif de coussin gonflable selon la revendication 1, **caractérisé en ce que** ledit couvercle (3) est un composant d'une colonne latérale dudit véhicule.

5. Dispositif de coussin gonflable selon l'une des revendications précédentes, **caractérisé en ce que** lesdites lignes fragiles (30 A) sont formées dans un dessous dudit couvercle (3) sensiblement opposé à ladite ouverture de caisse (5 A).

6. Dispositif de coussin gonflable selon l'une des revendications précédentes, **caractérisé en ce** ladite côte (12) est une section transversale sensiblement rectangulaire.

7. Dispositif de coussin gonflable selon l'une des revendications précédentes, **caractérisé en ce que** ledit un côté (5 B) de ladite caisse de coussin gonflable (5) s'étend sensiblement longitudinalement audit véhicule.

8. Dispositif de coussin gonflable selon l'une des revendications précédentes, **caractérisé en ce que** lesdits moyens d'attachement (14, 36) comprennent :
a) des orifices de montage (14) prévus à des intervalles prédéterminés le long dudit côté respectif (12 A) de ladite côte (12) adjacente audit un côté (5 B) de ladite caisse de coussin gonflable (5) ; et
b) des crochets (36) prévus sur ledit un côté (5 B) de ladite caisse de coussin gonflable (5) et s'engageant dans lesdits orifices de montage (14).

9. Dispositif de coussin gonflable selon l'une des revendications précédentes, comprenant de plus des moyens de plaque de renforcement (33) attachés à ladite section d'ouverture par fracture (30) afin de renforcer ladite section (30).

10. Dispositif de coussin gonflable selon la revendication 9, **caractérisé en ce que** lesdits moyens de plaque de renforcement (33) ont une forme et une taille qui correspondent sensiblement à la forme et à la taille de ladite section d'ouverture par fracture (30).

11. Dispositif de coussin gonflable selon l'une des revendications 9 ou 10 en combinaison avec la revendication 8, **caractérisé en ce que** lesdits moyens de plaque de renforcement (33) sont prévus avec une section de montage dépendante (10 A) qui est adjacente audit côté respectif (12 A) de ladite côte (12) adjacente audit un côté (5 B) de ladite caisse de coussin gonflable (5) et est formée avec des orifices qui concordent avec lesdits orifices de montage (14).

12. Dispositif de coussin gonflable selon la revendication 9, 10 ou 11, **caractérisé en ce que** chacun des deux dits côtés respectifs (12 B) de ladite côte (12) qui s'étendent transversalement vers ledit un côté (5 B) de ladite caisse de coussin gonflable (5) est espacé d'un bord adjacent desdits moyens de plaque de renforcement (33) par une distance (L 2) dans la gamme de 5 mm à 30 mm, mesurée parallèlement audit espacement respectif (L 1).

13. Dispositif de coussin gonflable selon l'une des revendications précédentes, **caractérisé en ce que** lesdits espacements (L 1) sont dans la gamme de 10 mm à 40 mm.

14. Dispositif de coussin gonflable selon l'une des revendications précédentes, **caractérisé en ce que** chacune desdites lignes fragiles (30 A) disposées à une position faisant face auxdits espacements (L 1) entre lesdits côtés respectifs (5 C, 12 B) de ladite caisse de coussin gonflable (5) et de la côte (12) est espacée du côté respectif (12 B) de ladite côte (12) par une distance (L 3) dans la gamme de 5 mm à 20 mm, mesurée parallèlement audit espacement respectif (L 1).

15. Dispositif de coussin gonflable selon l'une des revendications précédentes, **caractérisé en ce que** lesdites lignes fragiles (30 A) sont formées dans un dessous dudit couvercle (3) à des intervalles prédéterminés par une découpe laser le long du rebord extérieur de la section d'ouverture par fracture à partir du dessous dudit couvercle (3) avec un faisceau laser à pulsion généré à partir d'un générateur laser.
